# EUROPEAN PATENT SPECIFICATION

(11) **EP 3 336 037 B1**
(45) Date of publication and mention of the grant of the patent: **01.04.2020**
(21) Application number: 16397535.2
(22) Date of filing: 14.12.2016
(51) Int. Cl.: B66B 9/187, B66F 11/04, C21B 7/00, E04G 1/18, F27D 1/16

(54) **A SYSTEM COMPRISING A ROTATABLE WORK PLATFORM**
SYSTEM MIT EINER DREHBAREN ARBEITSPLATTFORM
SYSTÈME COMPRENANT UNE PLATE-FORME DE TRAVAIL ROTATIVE

(43) Date of publication of application: 20.06.2018
(73) Proprietor: Scanclimber Oy, 33960 Pirkkala (FI)
(72) Inventor: Matikainen, Pekka, 20760 Piispanristi (FI); Koskensalo, Kimmo, 37550 Lempäälä (FI)
(74) Representative: Berggren Oy, Tampere

(56) References cited:
- JP-A- H09 144 303
- JP-A- 2012 107 413

## Description

### FIELD OF THE DISCLOSED SOLUTION

The disclosed solution relates to a system having a rotatable work platform.

### BACKGROUND OF THE DISCLOSED SOLUTION

Access platforms are used, for example, in building, renovating and maintenance of buildings and other large structures such as ships and airplanes. Such platforms may be used to lift people and objects to desired locations above the ground.

A commonly used type of an access platform is a so-called mast climbing work platform which typically comprises at least one mast structure along which a work platform may ascend and descend. Such travel may be powered by, for example, an electric or a hydraulic motor or motors. Mast climbers may be mounted on a fixed base or a movable base such as a towable or self-powered carriage.

Access platforms such as mast climbing work platforms are typically equipped with control means with which an operator onboard the work platform or elsewhere can control the movement of the work platform.

Mast climbing work platforms are typically used in applications in which great lifting heights and load capacities are required. In such applications the mast structures are typically secured with supports to a structure, which is suitable for providing support and preferably immovable, such as a building wall, to prevent the mast structure from tilting, swinging or falling over. In some cases, the mast structure may be freely standing without any supports.

JPH09144303 discloses a system for inside cleaning of tanks, which comprises a liftable and lowerable work platform which may rotate around a center pole in a tank.

JP2012107413 discloses a scaffolding device comprising work platforms which may tilt towards to or away from a structure, such as a building wall.

### SUMMARY OF THE DISCLOSED SOLUTION

The system having the rotatable work platform according to the disclosed solution is disclosed in claim 1.

The disclosed solution is a system comprising a substantially vertical mast structure; a frame structure which is connected to the mast structure and adapted to move up and down along the mast structure; a rotating frame attached to the frame structure and adapted to rotate around the frame structure and the mast structure; and a work platform connected to the rotating frame for providing rotating motion of the work platform around the mast structure.

The disclosed rotating frame makes it possible to manufacture and use access platforms, especially of the mast climbing work platform type, with a rotating work platform. Thus, the disclosed solution makes it possible to efficiently employ work platforms in applications such as inside wind turbine towers, industrial chimneys or tanks.

In the disclosed solution the rotating frame comprises an opening which extends from the bottom of the rotating frame to the top of the rotating frame. In the same embodiment the frame structure comprises an opening which extends from the bottom of the frame structure to the top of the frame structure.

The vertical openings in the rotating frame and the frame structure make it possible for the rotating work platform to ascend and descend past supports with which the mast structure may be secured to a structure such as a building or a wall of a building. Thus, the disclosed solution makes it possible to efficiently employ rotating work platforms in applications where great lifting heights, necessitating mast structure supports, are required such as inside wind turbine towers or industrial chimneys. In such applications the supports may be located not only above the frame structure but also below it. In the embodiment of the disclosed solution without the openings, the supports are not in use or they are located above the frame structure.

In an embodiment of the disclosed solution the rotating frame may be fitted with one or more work platform modules and/or one or more telescopic work platform modules, though the rotating frame can be used as a work platform also without any such modules. Consequently, the disclosed solution with the rotating work platform can be configured to a great variety of different horizontal reaches using the rotating frame as the common basis.

Such variability in reach may be particularly advantageous when working inside a conical structure such as a wind turbine tower or an industrial chimney, the diameter of which diminishes as a function of height from the ground. Because of the modular nature of the work platform, adding or removing a work platform module or modules and/or a telescopic work platform module or modules only requires lowering the rotating frame near the ground for the addition or removal of the said modules, without any modifications or any other work required on any other part of the system such as the mast structure or its supports. Such lowering of the rotating frame is even not required in case the module or modules to be removed or added can be moved from or to place with a separate lifting and lowering apparatus.

Since the rotating frame as well as the frame structure are capable of ascending and descending past the supports of the mast structure which may be immovably attached, it is possible to erect the mast climbing work platform system with a rotating work platform piece by piece with sections of the mast structure as the work progresses and consequently greater lifting heights become required.

### BRIEF DESRCIPTON OF THE DRAWINGS

The figures illustrate example embodiments of the presented solution, and are not to be taken to be limiting the scope its use. The figures are not in any particular scale.
Figure 1 illustrates, according to one example embodiment, a mast climbing work platform system comprising a mast structure and a rotatable work platform comprising telescopic and non-telescopic platform modules.
Figure 2 illustrates, according to one example embodiment, a frame structure, suitable for use in the system illustrated in Figure 1.
Figures 3a and 3b illustrate, according to one example embodiment, from two different perspectives, a rotating frame of the rotatable work platform, suitable for use in the system illustrated in Figure 1.
Figures 4a and 4b illustrate, according to one example embodiment, from two different perspectives, the rotating frame of the rotatable work platform illustrated in Figures 3a and 3b, and two work platform modules.
Figure 5 illustrates a partial cross-section of the mast climber system shown in Figure 1, as viewed from above.
Figures 6a, 6b and 6c illustrate partial cross sectional views of the mast climbing work platform system shown in Figure 1 in different rotational positions of the rotatable work platform, as viewed from above.
Figure 7 illustrates the mast climbing work platform system shown in Figure 1 in use inside a cylindrical work structure, with supports for the mast structure attached to the inner wall of the work structure.
Figure 8 illustrates the mast climbing work platform system shown in Figure 1 without work platform modules in use inside and at the narrow top end of a conical work structure, with supports for the mast structure attached to the inner wall of the work structure.
Figure 9 illustrates the mast climbing work platform system shown in Figure 8 mounted on a movable base.
Figure 10 illustrates the mast climbing work platform system shown in Figure 8 mounted on a fixed base.
Figure 11 illustrates, according to one example embodiment, a rotatable work platform, wherein a lifting device is located above a core frame and a rotating frame.

### DETAILED DESCRIPTION OF THE DISCLOSED SOLUTION

In the text, reference is made to the figures with the following numerals and denotations:
- 1: Mast structure
- 10: Work platform
- 11: Work platform module
- 12: Telescopic work platform module
- 20: Lifting device
- 21: Lifting and lowering actuator
- 22: Safety brake
- 23: Opening
- 25: Roller
- 30: Core frame
- 31: Support ring
- 32: Bearing ring
- 33: Opening
- 34: Gear ring
- 35: Roller
- 36: Bearing arrangement
- 40: Rotating frame
- 41: Rotate drive
- 42: Turning actuator
- 43: Opening
- 44: Work platform deck
- 45: Roller
- 46: Bearing arrangement
- 47: Attachment element
- 50: Support
- 51: Support mounting
- 60: Movable base
- 61: Fixed base
- 70: Structure
- 80: Frame structure
- 83: Opening

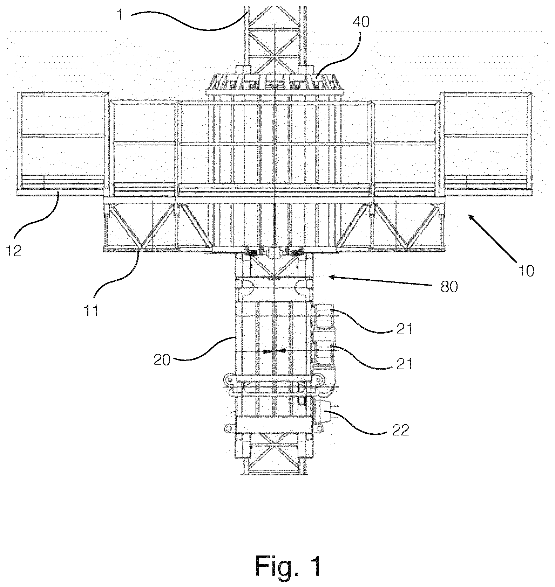

The system according to the disclosed solution, and Figure 1, comprises a substantially vertically erected mast structure 1, a frame structure 80 ascending and descending along the mast structure 1, a rotating frame 40 which may rotate around the frame structure 80, and work platform 10 attached to the rotating frame 40.

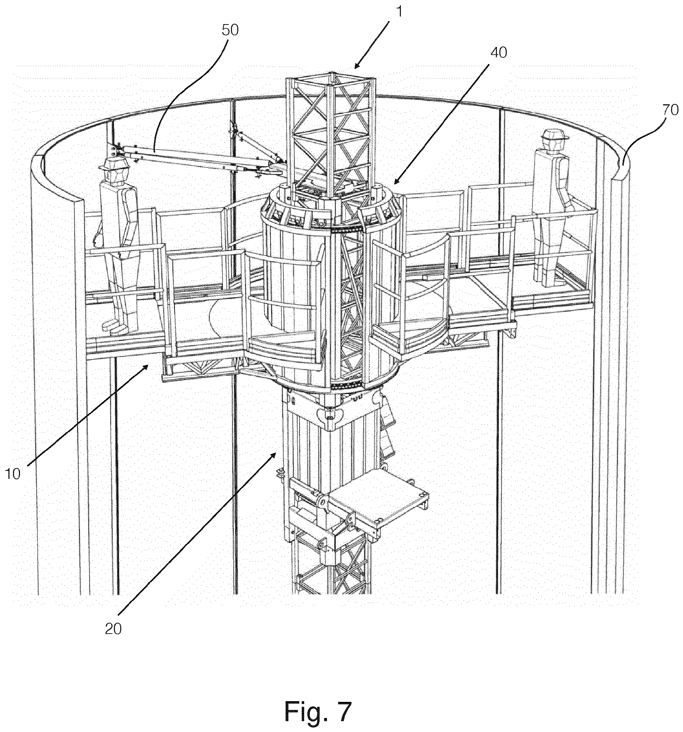

As illustrated in Figure 7, the mast structure 1 may be secured to a structure 70 such as a building or a building wall with one or more supports 50 to prevent the mast structure 1 from swinging, tilting or falling over. The structure is preferably immovable and/or separate from the mast. The support 50 is immovably attached to the mast structure 1. The support 50 extends away from the mast structure 1 and may comprise a rod that may be adjustable.

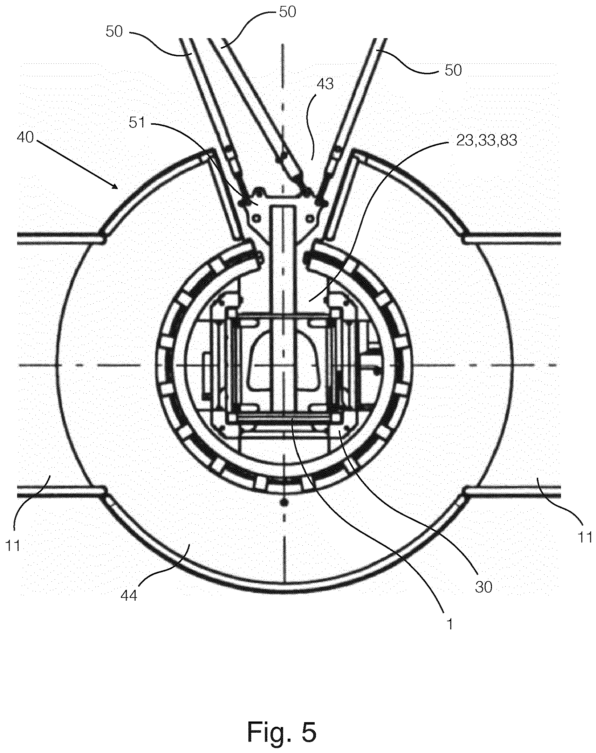

According to an example and Figure 5, the support 50 may be attached to the mast structure 1 via a support mountings 51 such that the mast structure 1 is fitted with one or more support mountings 51 and the supports 50 are attached to the support mountings 51.

According to an example and Figure 7, the mast structure 1 is 3-sided or 4-sided, and the support 50 or the support mounting 51 is attached to one side of the mast structure 1 or extend from one side of the mast structure 1. Preferably, all supports 50 or support mountings 51 are attached to the same one side of the mast structure 1 or extend from the same one side of the mast structure 1.

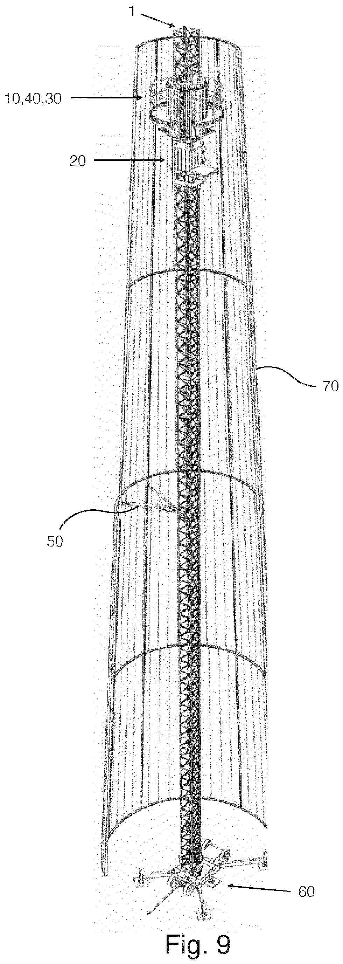

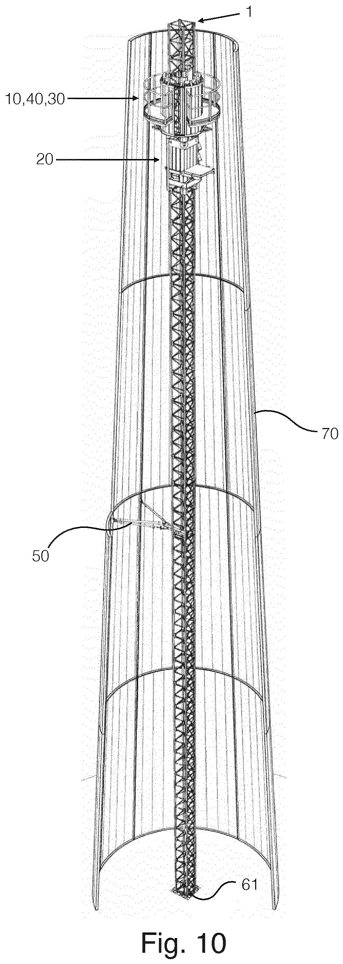

The mast structure 1 of the disclosed solution may be mounted on a movable base 60 as illustrated in Figure 9 or an immovable base 61 as illustrated in Figure 10. The mast structure 1 may comprise a plurality of mast structure sections thereby enabling the mast structure 1 to be assembled piece by piece from stackable mast structure sections to a desired height.

In the disclosed solution, the rotating frame 40 and the frame structure 80 are attached to each other in such a way that the rotating frame 40 may be rotated around the frame structure 80 and the mast structure 1. The rotation takes place around or defines an imaginary, vertical rotation axis that is parallel with the longitudinal direction of the mast structure 1. The frame structure 80 moves along the longitudinal direction of the mast structure 1. The frame structure 80 and the mast structure 1 to which the frame structure 80 is attached both remain unrotated in relation to each other.

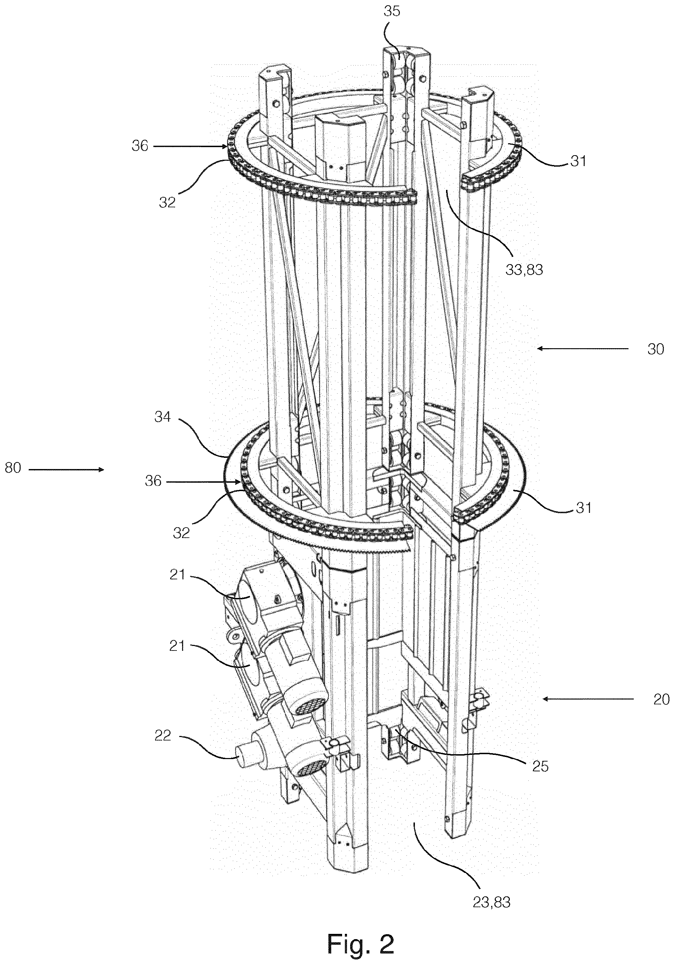

According to an example and Figure 2, the frame structure 80 is 3-sided or 4-sided.

In a specific embodiment of the disclosed solution, shown in the figures, the frame structure 80 and the rotating frame 40 comprise openings 83 and 43, respectively, which enable the frame structure 80 and the rotating frame 40 to ascend and descend along the mast structure 1 so that they may pass the supports 50 while the supports 50 remain immovably in place and the opening 43 is aligned with the opening 83.

The opening 83 may be located on one side of the frame structure 80. The opening 83 is to be located at that side of the mast structure 1 where the support 50 is located, as illustrated in Figure 5. The opening 83 is vertically aligned or extends in the longitudinal direction of the mast structure 1. Preferably, the opening 83 has a width of no more than is necessary for the support mounting 51 and/or the support 50 to pass through the opening 83.

In the disclosed solution, the frame structure 80 may be a rigid structural assembly connected to the mast structure 1 via, for example, rollers 25, 35. In addition, the frame structure 80 may comprise a bearing arrangement 36 configured so as to enable the rotating frame 40 to rotate around the frame structure 80 and to reduce friction between the frame structure 80 and the rotating frame 40. For supporting the rotating frame 40, the bearing arrangement 36 may for example comprise at least one support ring 31 and/or at least one bearing ring 32. The frame structure 80 may comprise a gear ring 34 or other such contact surface around the frame structure 80.

In the specific embodiment mentioned above, to enable frame structure 80 to pass the support 50 while descending and ascending, the bearing arrangement 36, the support ring 31 and/or the gear ring 34 is discontinuous at the opening 83.

In the disclosed solution, the frame structure 80 may comprise at least one lifting and lowering actuator 21 for effecting ascending and descending movement for the frame structure 80 along the mast structure 1. The lifting and lowering actuator 21 may additionally provide the functionality of keeping the frame structure 80 in place at the mast structure 1 when ascending or descending of the frame structure 80 is not desired such as during work being conducted on the work platform 10.

The ascending and descending movement of the frame structure 80 may be brought about, for example, by equipping the lifting and lowering actuator 21 with a pinion gear which may be coupled with a gear rack in the mast structure 1. The lifting and lowering actuator 21 may be, for example, an electric motor, a hydraulic motor or a pneumatic motor.

In the disclosed solution, the frame structure 80 may comprise at least one safety brake 22 for securing the frame structure 80 to the mast structure 1, which functionality may be brought about, for example, by equipping the safety brake 22 with a wedge or wedges, a gear rack, or a non-rotating pinion gear which may be coupled with a gear rack in the mast structure 1 when the safety brake 22 is engaged. The safety brake 22 may be, for example, mechanically or electromechanically engaged and disengaged. Engagement of the safety break may be triggered by a great downward acceleration of the frame structure 80, such as upon a failure of the lifting and lowering actuator 21.

According to an example of the disclosed solution, as illustrated in Figure 2 and also being applicable to the specific embodiment mentioned above, the frame structure 80 may comprise two sub-assemblies: a lifting device 20 and a core frame 30. In this example, the lifting device 20 comprises at least one lifting and lowering actuator 21. The lifting device 20 may also comprise at least one safety brake 22 and/or the rollers 25. In the same example, the core frame 30 may comprise the rollers 35, at least one bearing arrangement 36, at least one support ring 31, and/or the gear ring 34.

According to a first example and Figure 2, the lifting device 20 and the core frame 30 are separate and configured such that the core frame 30 may rest on top of the lifting device 20, above the lifting device 20, without any fixtures for coupling the lifting device 20 and the core frame 30 to each other. The lifting device 20 drives both the lifting device 20 and the core frame 30 with the lifting and lowering actuator or actuators 21 located in the lifting device 20.

According to a second example, the lifting device 20 and the core frame 30 comprise attachment elements such that the core frame 30 can be attached on top of the lifting device 20. In this example, the lifting device 20 may drive both the lifting device 20 and the core frame 30 with the lifting and lowering actuator or actuators 21 located in the lifting device 20.

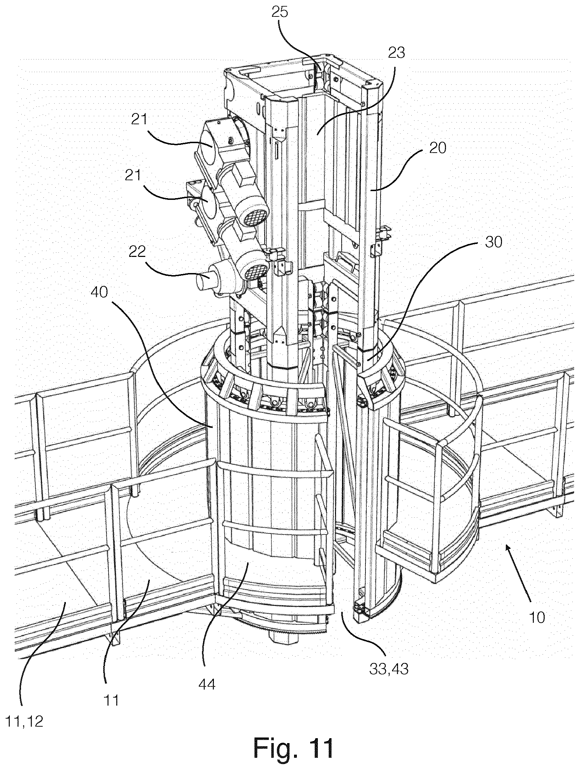

According to a third example and Figure 11, the lifting device 20 and the core frame 30 comprise attachment elements such that the core frame 30 can be attached beneath the lifting device 20, below the lifting device 20. In this example, the lifting device 20 may drive both the lifting device 20 and the core frame 30 with the lifting and lowering actuator or actuators 21 located in the lifting device 20.

In the examples above, the core frame 30 may comprise at least one lifting and lowering actuator and/or at least one safety brake similar to the ones explained above.

In the specific embodiment of the disclosed solution, applying to the two sub-assemblies mentioned above, and shown in the figures, the core frame 30 comprises an opening 33, which enables the core frame 30 to ascend and descend along the mast structure 1 so that it may pass the support 50 while the support 50 remains immovably in place and the opening 33 is aligned with the opening 43. The opening 33 extends from the bottom of the core frame 30 to the top of the core frame 30. According to an example and Figure 2, the core frame 30 is 4-sided or 3-sided.

The opening 33 may be located on one side of the core frame 30. The opening 33 is to be located at that side of the mast structure 1 where the support 50 is located, as illustrated in Figure 5. The opening 33 is vertically aligned or extends in the longitudinal direction of the mast structure 1. Preferably, the opening 33 has a width of no more than is necessary for the support mounting 51 and/or the support 50 to pass through the opening 33.

In this specific embodiment, the lifting device 20 comprises an opening 23, which enables the lifting device 20 to ascend and descend along the mast structure 1 so that it may pass the support 50 while the support 50 remains immovably in place. The opening 23 is aligned with the opening 33. The opening 23 extends from the bottom of the lifting device 20 to the top of the lifting device 20. According to an example and Figure 2, the lifting device 20 is 4-sided or 3-sided.

The opening 23 may be located on one side of the lifting device 20. The opening 23 is to be located at that side of the mast structure 1 where the support 50 is located, as illustrated in Figure 5. The opening 23 is vertically aligned or extends in the longitudinal direction of the mast structure 1. Preferably, the opening 23 has a width of no more than is necessary for the support mounting 51 and/or the support 50 to pass through the opening 23.

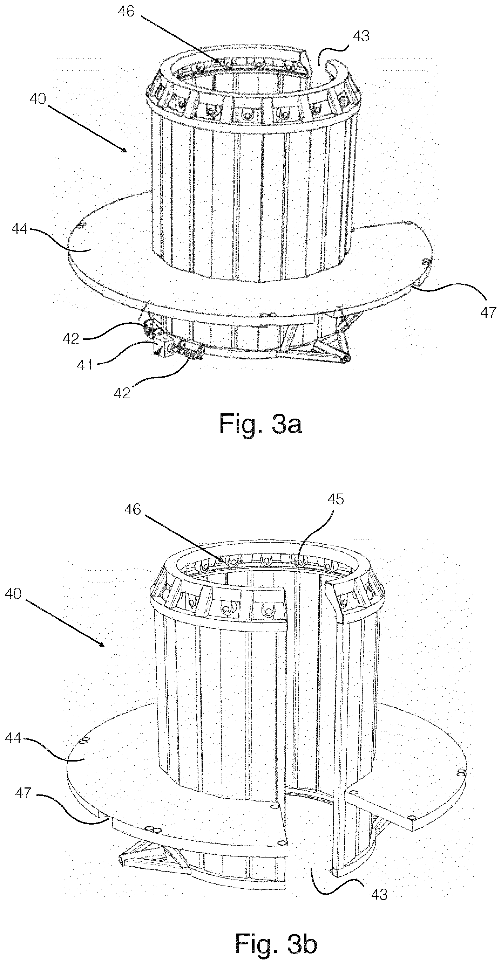

In the disclosed solution, and in Figures 3a and 3b, the rotating frame 40 may comprise a bearing arrangement 46, for example a plurality of rollers 45, via which the rotating frame 40 is in contact with the frame structure 80 or the core frame 30. The bearing arrangement 46 is in contact with the bearing arrangement 36. The rotating frame 40 may be configured such that the rollers 45 are circularly arranged and rest on the correspondingly circular support ring 31 in the frame structure 80 or in the core frame 30.

In the specific embodiment of the disclosed solution mentioned above, the opening 43 extends from the bottom of the rotating frame 40 to its top, thereby enabling the rotating frame 40 to pass the support 50 attached to the mast structure 1 during the ascend and descend of the rotating frame 40 along the mast structure 1. Preferably, the opening 43 has a width of no more than is necessary for the support 50 and/or the support mounting 51 to pass through the opening 43, as illustrated in Figure 5.

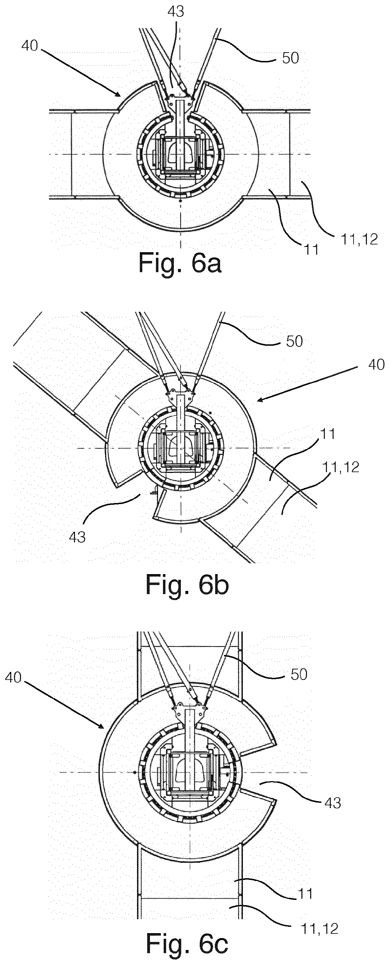

According to one example, as illustrated in Figure 3b, the opening 43 extends vertically from the bottom of the rotating frame 40 to its top or extends in the longitudinal direction of the mast structure 1. According to this example, the rotating frame 40 may not rotate while it passes the support 50 of the mast structure 1, i.e. while the support 50 is inside the opening 43, as illustrated in Figure 5 and Figure 6a.

According to another example, the opening 43 extends from the bottom of the rotating frame 40 to its top diagonally such that the bottom end of the opening 43 is transversally offset from its top end. The opening 43 extends in a direction oblique in relation to the longitudinal direction of the mast structure 1. According to this example, the rotating frame 40 may rotate while it passes the support 50 of the mast structure 1, that is, while the support 50 is inside the opening 43. Thus, the rotational behavior of the rotating frame 40 during its passing of the supports 50 may be configured by configuring the shape of the opening 43. Such rotational behavior has an effect on, for example, the accessibility of different areas of the structure 70 or other work area within the reach of the work platform 10, such as the inner walls of a wind turbine tower, while the rotating frame 40 passes the supports 50 during ascent or descent along the mast structure 1.

In the disclosed solution and the specific embodiment of the disclosed solution, the rotating frame 40 may additionally comprise at least one rotate drive 41 for effecting the rotational motion of the rotating frame 40. The rotate drive 41 may be configured so that the rotational motion of the rotating frame 40 is unidirectional in a desired direction. Alternatively, the rotate drive 41 may be configured so that the rotational motion of the rotating frame 40 can be in either direction. The rotate drive 41 may be, for example, an electric motor, a hydraulic motor, a pneumatic motor, or transmission which can be connected to a power source external to the rotating frame 40. In an example in which the rotate drive 41 is a transmission, an external power source may be, for example, a crank manually turned by a human being, or a power tool such as a cordless drill or similar.

In an example the rotational motion of the rotating frame 40 is effected by the rotate drive 41 so that the rotate drive 41 is connected to at least two turning actuators 42 such as, for example, worm screws which are in contact with the gear ring 34 in the frame structure 80 or in the core frame 30. In this embodiment, the turning actuators 42 may advantageously be distanced from each other such that at least one of the turning actuators 42 is capable effecting a rotating force to the rotating frame 40 in all rotational positions of the rotating frame 40, including when at least one other turning actuator 42 is located at the opening 83.

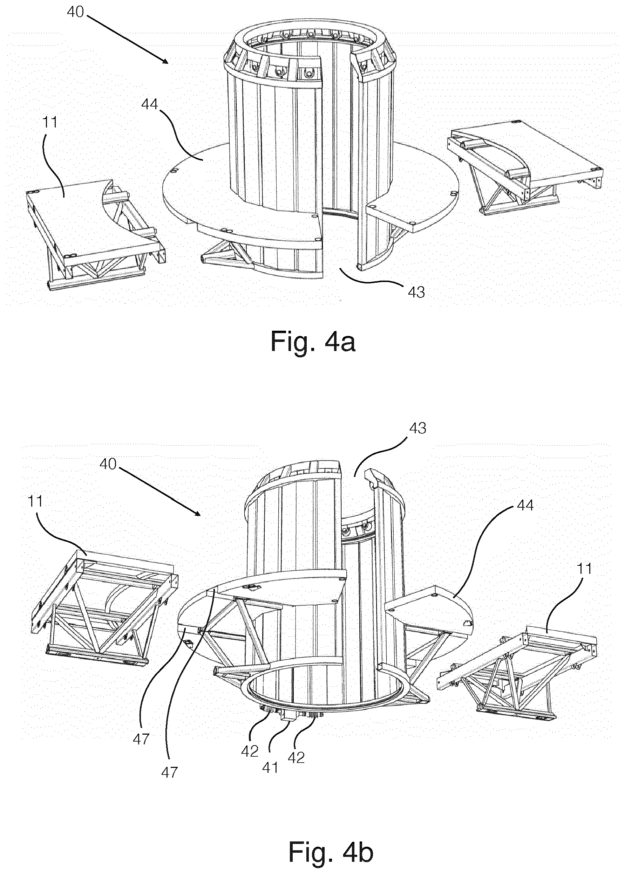

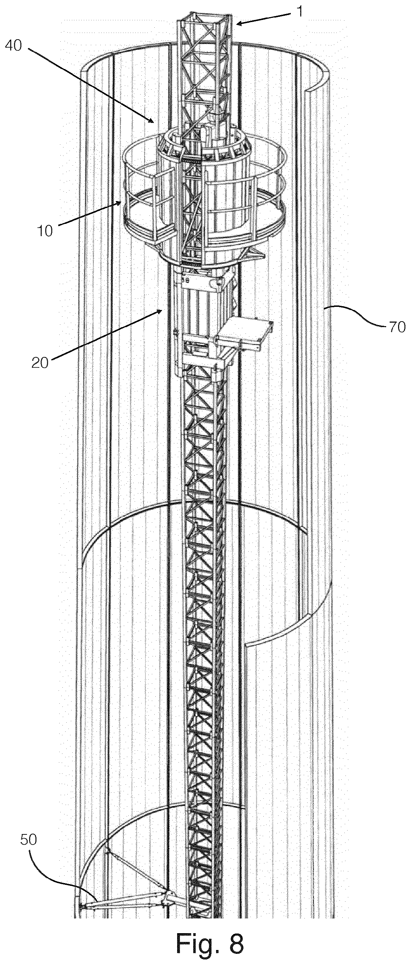

In the disclosed solution, the rotating frame 40 may comprise a work platform deck 44 as illustrated in Figure 4a and Figure 4b. The work platform deck 44 may be equipped with safety railings, as illustrated in Figure 8, such that the rotating frame 40 may serve as a work platform 10, as illustrated in Figure 8. The work platform deck 44 may additionally be equipped with an access gate.

The rotating frame 40 may additionally comprise, as illustrated in Figure 4b, attachment elements 47 for attaching at least one work platform module 11 and/or at least one telescopic platform module 12 to the rotating frame 40, as illustrated in Figure 1 and in Figure 7. The work platform module 11 and the telescopic work platform module 12 may be equipped with safety railings, as illustrated in Figure 1 and in Figure 7, an access gate and/or other desired safety, accessibility and/or access control equipment.

If at least one work platform module 11 and/or the at least one telescopic work platform module 12 is attached to the rotating frame 40, then the work platform 10 comprises the work platform deck 44, the work platform module 11 and the telescopic work platform module 12 plus any safety railings, access gates and/or other such safety, accessibility and/or access control equipment attached to the work platform deck 44 and the work platform module 11 and the telescopic work platform module 12.

The disclosed mast climbing work platform system may advantageously be erected piece by piece with sections of the mast structure 1 such that initially the mast structure 1 may be of at least the height of the frame structure 80. Advantageously, subsequent erection of the mast structure 1 may be brought about by stacking more sections of the mast structure 1 on top of each other according to the desired ascending height for the work platform 10.

Furthermore, in the specific embodiment of the disclosed solution, the supports 50 may be attached to the mast structure 1 with desired vertical intervals as the height of the mast structure 1 increases so that the frame structure 80 and the rotating frame 40 may ascend and descend along the mast structure 1 past any and all supports 50 to, for example, lift or lower people or objects.

In the disclosed solution, the rotating frame 40 having the work platform deck 44 may be used with or without the work platform modules 11 or the telescopic work platform modules 12 described above. Thus, the horizontal reach of the work platform 10 of the disclosed system may advantageously vary depending on the number of the work platform modules 11 and/or the telescopic work platform modules 12, if any, attached to the rotating frame 40, as well as the position of telescopic extension of the telescopic work platform modules 12, if attached to the rotating frame 40. Such modular configurability and reach variability is of great benefit when using the disclosed mast climbing work platform system inside a conical structure such as a wind turbine tower or an industrial chimney, whose diameter typically diminishes as a function of distance from the ground.

Thus, the disclosed system enables fast and convenient alteration of work platform dimensions and horizontal reach without any modifications in or other work required on the mast structure 1 or its supports 50. Moreover, the rotating frame 40 may be freely rotated in a desired position at a desired height with only constraints on such rotation being stages in ascend and descend when the support 50 is in the opening 43 of the rotating frame 40.

The disclosed solution further relates to an additional system comprising the core frame 30 adapted to be connected to the mast structure 1, the rotating frame 40 adapted to be connected to the core frame 30 and to rotate around the core frame 30, and the work platform 10 adapted to be connected to the rotating frame 40 for providing rotating motion of the work platform 10 around the mast structure 1 and the core frame 30, all of which are explained in the various examples above and applicable to this system also. The system is suitable for attachment to the substantially vertical mast structure 1.

According to an example, the additional system further applies the principles of the specific embodiment explained above. Therefore, the rotating frame 40 may comprise the opening 43 and the core frame 30 may comprise the opening 33, all of which are explained in the various examples above and also applicable to this system. For example, the core frame 30 may apply the three examples explained above and relating to the core frame 30 being attached to the lifting device 20 or resting on the lifting device 20.

The disclosed solution is not limited to the various examples and embodiments presented above. The scope of the invention is defined by the appended claims.

## Claims

1. A system comprising:
a substantially vertical mast structure (1);
a frame structure (80) which is connected to the mast structure (1) and adapted to move up and down along the mast structure (1);
a rotating frame (40) attached to the frame structure (80) and adapted to rotate around the frame structure (80) and the mast structure (1); and
a work platform (10) connected to the rotating frame (40) for providing rotating motion of the work platform (10) around the mast structure (1)
**characterized in that**
the rotating frame (40) comprises an opening (43) which extends from the bottom of the rotating frame (40) to the top of the rotating frame (40) and thereby enables the rotating frame (40) to ascend and descend along the mast structure (1) past one or more supports (50) immovably attached to the mast structure (1); and
the frame structure (80) comprises an opening (83) which extends from the bottom of the frame structure (80) to the top of the frame structure (80) and thereby enables the frame structure (80) to ascend and descend along the mast structure (1) past the one or more supports (50).

2. The system according to claim 1, wherein the frame structure (80) comprises:
a core frame (30) adapted to move up and down along the mast structure (1), wherein the rotating frame (40) is attached to the core frame (30) and adapted to rotate around the core frame (30); and
a lifting device (20) adapted to move up and down along the mast structure (1), wherein the lifting device (20) is capable of driving the core frame (30) up and down along the mast structure (1).

3. The system according to claim 2, wherein the core frame (30) rests on top of the lifting device (20).

4. The system according to claim 2, wherein the core frame (30) is fixed to the lifting device (20), wherein the core frame (30) is above or below the lifting device (20).

5. The system according to claim 1, wherein the frame structure (80) comprises at least one lifting and lowering actuator (21) which is capable of driving the frame structure (80) up and down along the mast structure (1).

6. The system according to any one of the claims 1 to 5,
wherein the system comprises least one rotate drive (41) configured so as to bring about rotating motion of the rotating frame (40); and
wherein the least one rotate drive (41) is attached to the rotating frame (40) and/or the frame structure (80).

7. The system according to any one of the claims 1 to 6,
wherein the frame structure (80) comprises at least one gear ring (34) around the frame structure (80); and
wherein the at least one gear ring (34) is provided with an opening thereby enabling the at least one gear ring (34), together with the frame structure (80), to ascend and descend along the mast structure (1) past the supports (50).

8. The system according to claim 7,
wherein the rotating frame (40) comprises at least two drivable turning actuators (42) which are in contact with the at least one gear ring (34) for effecting the rotational motion of the rotating frame (40), and
wherein the at least two turning actuators (42) are adapted to be drivable manually or by a power tool.

9. The system according to claim 8,
wherein the rotating frame (40) comprises a bearing arrangement (46) around the rotating frame (40),
wherein the bearing arrangement (46) is provided with an opening thereby enabling the bearing arrangement (46), together with rotating frame (40), to ascend and descend along the mast structure (1) past the supports (50).

10. The system according to any one of the claims 1 to 9, wherein the work platform (10) comprises
a work platform deck (44) attached to the rotating frame (40); and
at least one work platform module (11) releasably attached to the work platform deck (44); or
two or more work platform modules (11) releasably attached to the work platform deck (44), wherein the two or more work platform modules (11) are releasably attached to each other and one after another.

11. The system according to claim 10, wherein the work platform (10) comprises
a telescopic work platform module (12) releasably attached to the work platform deck (44), the at least one work platform module (11) or the two or more work platform modules (11).

12. The system according to any one of the claims 1 to 11, wherein the mast structure (1) is mounted on a movable base (60) or on a fixed base (61).

## Patentansprüche

1. System, umfassend:
eine im Wesentlichen vertikale Mastkonstruktion (1);
eine Rahmenkonstruktion (80), die mit der Mastkonstruktion (1) verbunden und dafür ausgelegt ist, sich längs der Mastkonstruktion (1) aufwärts und abwärts zu bewegen;
ein Drehrahmen (40), der an der Rahmenkonstruktion (80) angebracht und dafür ausgelegt ist, sich um die Rahmenkonstruktion (80) und die Mastkonstruktion (1) zu drehen; und
eine Arbeitsplattform (10), die mit dem Drehrahmen (40) verbunden ist, um die Drehbewegung der Arbeitsplattform (10) um die Mastkonstruktion (1) bereitzustellen,
**dadurch gekennzeichnet, dass**
der Drehrahmen (40) eine Öffnung (43) umfasst, die sich vom unteren Ende des Drehrahmens (40) bis zum oberen Ende des Drehrahmens (40) erstreckt und es dadurch dem Drehrahmen (40) ermöglicht, längs der Mastkonstruktion (1) an einer oder mehrerer Stützen (50) vorbei hinauf- und herunterzufahren, die an der Mastkonstruktion (1) unbeweglich befestigt sind;
die Rahmenkonstruktion (80) eine Öffnung (83) umfasst, die sich vom unteren Ende der Rahmenkonstruktion (80) bis zum oberen Ende der Rahmenkonstruktion (80) erstreckt und es dadurch der Rahmenkonstruktion (80) ermöglicht, längs der Mastkonstruktion (1) an einer oder mehrerer Stützen (50) vorbei hinauf- und herunterzufahren.

2. System nach Anspruch 1, wobei die Rahmenkonstruktion (80) Folgendes umfasst:
ein Rahmengerippe (30), das dafür ausgelegt ist, sich längs der Mastkonstruktion (1) aufwärts und abwärts zu bewegen, wobei der Drehrahmen (40) an dem Rahmengerippe (30) angebracht und dafür ausgelegt ist, sich um das Rahmengerippe (30) zu drehen; und
eine Hebevorrichtung (20), die dafür ausgelegt ist, sich längs der Mastkonstruktion (1) aufwärts und abwärts zu bewegen, wobei die Hebevorrichtung (20) in der Lage ist, das Rahmengerippe (30) längs der Mastkonstruktion (1) hoch- und herunterzufahren.

3. System nach Anspruch 2, wobei das Rahmengerippe (30) am oberen Ende der Hebevorrichtung (20) ruht.

4. System nach Anspruch 2, wobei das Rahmengerippe (30) an der Hebevorrichtung (20) befestigt ist und wobei sich das Rahmengerippe (30) oberhalb oder unterhalb der Hebevorrichtung (20) befindet.

5. System nach Anspruch 1, wobei die Rahmenkonstruktion (80) mindestens einen Hebe- und Absenkstellantrieb (21) umfasst, der in der Lage ist, die Rahmenkonstruktion (80) längs der Mastkonstruktion (1) hoch- und herunterzufahren.

6. System nach einem der Ansprüche 1 bis 5,
wobei das System mindestens einen Drehantrieb (41) umfasst, der so gestaltet ist, dass eine Drehbewegung des Drehrahmens (40) bewirkt wird; und
wobei mindestens ein Drehantrieb (41) an dem Drehrahmen (40) und/oder der Rahmenkonstruktion (80) angebracht ist.

7. System nach einem der Ansprüche 1 bis 6,
wobei die Rahmenkonstruktion (80) mindestens einen Zahnkranz (34) um die Rahmenkonstruktion (80) herum umfasst; und
wobei der mindestens eine Zahnkranz (34) mit einer Öffnung bereitgestellt wird, wodurch es dem mindestens einen Zahnkranz (34), zusammen mit der Rahmenkonstruktion (80), ermöglicht wird, längs der Mastkonstruktion (1) an den Stützen (50) vorbei hinauf- und herunterzufahren.

8. System nach Anspruch 7,
wobei der Drehrahmen (40) mindestens zwei betreibbare Drehstellantriebe (42) umfasst, die mit dem mindestens einen Zahnkranz (34) in Kontakt stehen, um die Drehbewegung des Drehrahmens (40) zu bewirken, und
wobei die mindestens zwei Drehstellantriebe (42) dafür ausgelegt sind, manuell oder mithilfe eines angetriebenen Arbeitsmittels betreibbar zu sein.

9. System nach Anspruch 8,
wobei der Drehrahmen (40) eine Lageranordnung (46) um den Drehrahmen (40) herum umfasst,
wobei die Lageranordnung (46) mit einer Öffnung bereitgestellt, wodurch es der Lageranordnung (46), zusammen mit dem Drehrahmen (40), ermöglicht wird, längs der Mastkonstruktion (1) an den Stützen (50) vorbei hinauf- und herunterzufahren.

10. System nach einem der Ansprüche 1 bis 9, wobei die Arbeitsplattform (10) Folgendes umfasst:
ein an dem Drehrahmen (40) angebrachtes Arbeitsplattformdeck (44); und
mindestens ein Arbeitsplattformmodul (11), das an dem Arbeitsplattformdeck (44) lösbar angebracht ist; oder
zwei oder mehr Arbeitsplattformmodule (11), die an dem Arbeitsplattformdeck (44) lösbar angebracht sind, wobei die zwei oder mehr Arbeitsplattformmodule (11) lösbar aneinander und nacheinander angebracht werden.

11. System nach Anspruch 10, wobei die Arbeitsplattform (10) Folgendes umfasst:
ein teleskopisches Arbeitsplattformmodul (12), das an dem Arbeitsplattformdeck (44), dem mindestens einen Arbeitsplattformmodul (11) oder den zwei oder mehr Arbeitsplattformmodulen (11) lösbar angebracht ist.

12. System nach einem der Ansprüche 1 bis 11, wobei die Mastkonstruktion (1) an ein ortsveränderliches Unterteil (60) oder an ein feststehendes Unterteil (61) montiert ist.

## Revendications

1. Système comprenant :
une structure de mât sensiblement vertical (1) ;
une structure de bâti (80) qui est raccordé à la structure de mât (1) et conçue afin de se déplacer de haut en bas le long de la structure de mât (1) ;
un bâti rotatif (40) fixé à la structure de bâti (80) et conçu afin de tourner autour de la structure de bâti (80) et la structure de mât (1) ; et
une plate-forme de travail (10) raccordée au bâti rotatif (40) permettant de fournir un mouvement rotatif de la plate-forme de travail (10) autour de la structure de mât (1),
**caractérisé en ce que**
le bâti rotatif (40) comprend une ouverture (43) qui s'étend depuis le bas du bâti rotatif (40) vers le haut du bâti rotatif (40) et permet ainsi au bâti rotatif (40) de monter et descendre le long de la structure de mât (1) en passant un ou plusieurs support(s) (50) fixé(s) de manière immobile à la structure de mât (1) ; et
la structure de bâti (80) comprend une ouverture (83) qui s'étend depuis le bas de la structure de bâti (80) vers le haut de la structure de bâti (80) et permet ainsi à la structure de bâti (80) de monter et descendre le long de la structure de mât (1) en passant un ou plusieurs support(s) (50).

2. Système selon la revendication 1, dans lequel la structure de bâti (80) comprend :
un bâti central (30) conçu afin de se déplacer de haut en bas le long de la structure de mât (1), dans lequel le bâti rotatif (40) est fixé au bâti central (30) et conçu afin de tourner autour du bâti central (30) ; et
un dispositif de levage (20) conçu afin de se déplacer de haut en bas le long de la structure de mât (1), dans lequel le dispositif de levage (20) est capable d'entraîner le bâti central (30) de bas en haut le long de la structure de mât (1).

3. Système selon la revendication 2, dans lequel le bâti central (30) s'appuie sur le haut du dispositif de levage (20).

4. Système selon la revendication 2, dans lequel le bâti central (30) est fixé au dispositif de levage (20), dans lequel le bâti central (30) est au-dessus ou au-dessous du dispositif de levage (20).

5. Système selon la revendication 1, dans lequel la structure de bâti (80) comprend au moins un actionneur de levage et d'abaissement (21) capable d'entraîner la structure de bâti (80) de bas en haut le long de la structure de mât (1).

6. Système selon l'une quelconque des revendications 1 à 5,
dans lequel le système comprend au moins un entraînement rotatif (41) configuré de façon à provoquer un mouvement de rotation du bâti rotatif (40) ; et
dans lequel le au moins un entraînement rotatif (41) est fixé au bâti rotatif (40) et/ou à la structure de bâti (80).

7. Système selon l'une quelconque des revendications 1 à 6,
dans lequel la structure de bâti (80) comprend au moins une couronne dentée (34) autour de la structure de bâti (80) ; et
dans lequel l'au moins une couronne dentée (34) est dotée d'une ouverture permettant ainsi à la au moins une couronne dentée (34), avec la structure de bâti (80), de monter et descendre le long de la structure de mat (1) au-delà des supports (50).

8. Système selon la revendication 7,
dans lequel le bâti rotatif (40) comprend au moins deux actionneurs rotatifs à entraîner (42) qui sont en contact avec la au moins une couronne dentée (34) permettant d'effectuer le mouvement de rotation du bâti rotatif (40), et
dans lequel les au moins deux actionneurs rotatifs (42) sont conçus afin de pouvoir être entraînés manuellement ou par un outil électrique.

9. Système selon la revendication 8,
dans lequel le bâti rotatif (40) comprend un agencement de palier (46) autour du bâti rotatif (40),
dans lequel l'agencement de palier (46) est doté d'une ouverture permettant ainsi à l'agencement de palier (46), avec le bâti rotatif (40), de monter et descendre le long de la structure de mât (1) au-delà des supports (50).

10. Système selon l'une quelconque des revendications 1 à 9, dans lequel la plate-forme de travail (10) comprend :
un plateau de plate-forme de travail (44) fixé au bâti rotatif (40) ; et
au moins un module de plate-forme de travail (11) fixé de manière amovible au plateau de la plate-forme de travail (44) ; ou
deux modules de plate-forme de travail ou plus (11) fixés de manière amovible au plateau de la plate-forme de travail (44), dans lequel les deux modules de plate-forme de travail ou plus (11) sont fixés de manière amovible l'un à l'autre et l'un après l'autre.

11. Système selon la revendication 10, dans lequel la plate-forme de travail (10) comprend :
un module de plate-forme de travail télescopique (12) fixé de manière amovible au plateau de la plate-forme de travail (44), au au moins un module de plate-forme de travail (11) ou aux deux modules de plate-forme de travail ou plus (11).

12. Système selon l'une quelconque des revendications 1 à 11, dans lequel la structure de mât (1) est montée sur une base mobile (60) ou sur une base fixe (61).
